# DEMANDE DE BREVET EUROPEEN

(11) **EP 3 098 981 A2**
(43) Date de publication de la demande: **30.11.2016**
(21) Numéro de dépôt: 16170750.0
(22) Date de dépôt: 20.05.2016
(51) Int. Cl.: H04B 10/116, B60Q 1/02, B60Q 1/14, B60Q 1/00

(54) **DISPOSITIF LUMINEUX D'ÉCLAIRAGE ET/OU DE SIGNALISATION POUR VÉHICULE**

(30) Priorité: 26.05.2015 FR 1554713
(71) Demandeur: VALEO VISION, 93012 Bobigny Cedex (FR)
(72) Inventeur: HUE, David, 95430 BUTRY SUR OISE (FR)

(57) **Abrégé**

La présente invention concerne un dispositif lumineux (101 a, 101b, 101 c, 102a, 102b, 200), notamment d'éclairage et/ou de signalisation (100) pour véhicule automobile, comprenant :
- au moins une première source de lumière (202) destinée à émettre un premier faisceau lumineux modulé codant une information;
- au moins une deuxième source de lumière (206, 203) destinée à émettre un deuxième faisceau lumineux modulé codant une information;
- un dispositif de contrôle adapté pour :
- déterminer, sur réception d'une information à transmettre via le dispositif lumineux, si un premier faisceau lumineux destiné à être émis par la première source doit être modulé pour coder ladite information à transmettre et/ou si un deuxième faisceau destiné à être émis par la deuxième source doit être modulé pour coder ladite information à transmettre, ladite détermination étant fonction d'une information relative à l'ensoleillement local ;
- moduler, en fonction de ladite détermination, le premier faisceau lumineux et/ou le deuxième faisceau lumineux d'alimentation pour coder ladite information à transmettre.

## Description

La présente invention concerne le domaine des modules d'éclairage et notamment les modules d'éclairage pour automobiles communicantes.

Le plus souvent, lorsque des dispositifs de communication / détection sont utilisés au sein d'une automobile, un module spécifique est installé, par exemple derrière le pare-brise ou dans le pare-chocs.

Ces dispositifs de communication / détection peuvent mettre en oeuvre différentes technologies (infrarouge, électromagnétique, etc.) afin de détecter certains obstacles ou de communiquer avec d'autres véhicules (ex. transmission d'informations relatives à la vitesse, aux freinages, à l'adhérence de la route, etc.).

Ces dispositifs de communication / détection peuvent générer des contraintes d'intégration mécanique bloquantes du fait de leur encombrement et de la nécessité d'alimentation électrique de ces dispositifs.

Il existe ainsi un besoin pour simplifier (voire, pour supprimer) les contraintes d'intégration mécanique de ces dispositifs.

Par ailleurs, les dispositifs de communication / détection peuvent souffrir d'une portée de communication / détection limitée. Si cette portée peut être liée à une puissance des moyens de communication (ex. émetteur de lumière en visible), il est difficilement envisageable d'augmenter la puissance globale de ces moyens de communication installés au sein de véhicule : en effet, ces moyens de communication pourraient éblouir les autres usagers de la route si la puissance globale utilisée était trop importante.

Il existe ainsi un besoin pour augmenter la portée des dispositifs de communication / détection utilisée au sein d'un véhicule sans pour autant augmenter la puissance globale de ces moyens.

La présente invention vient améliorer la situation.

À cet effet, la présente invention propose un dispositif lumineux, notamment d'éclairage et/ou de signalisation pour véhicule automobile, comprenant :
- au moins une première source de lumière destinée à émettre un premier faisceau lumineux modulé codant une information;
- au moins une deuxième source de lumière destinée à émettre un deuxième faisceau lumineux modulé codant une information;
- un dispositif de contrôle adapté pour :
   - déterminer, sur réception d'une information à transmettre via le dispositif lumineux, si un premier faisceau lumineux destiné à être émis par la première source doit être modulé pour coder ladite information à transmettre et/ou si un deuxième faisceau destiné à être émis par la deuxième source doit être modulé pour coder ladite information à transmettre, ladite détermination étant fonction d'une information relative à l'ensoleillement local ;
   - moduler, en fonction de ladite détermination, le premier faisceau lumineux et/ou le deuxième faisceau lumineux d'alimentation pour coder ladite information à transmettre.

L'étape de détermination effectuée par le contrôleur permet de choisir via quelle source lumineuse l'information à transmettre sera émise. En effet, la variation du signal d'alimentation des sources lumineuses peut permettre de faire clignoter ces sources et ainsi peut permettre un codage de l'information sous forme de variations lumineuses.

Le fait de choisir la source lumineuse à utiliser pour une telle transmission (et donc de choisir quel signal d'alimentation modifier), peut permettre de déterminer la source la plus pertinente pour une telle transmission (ex. feux de route lorsqu'ils sont allumés, DRL lorsque les autres feux sont éteints). Cette détermination permet ainsi de garantir une qualité de la transmission optimale.

Le contrôleur peut être apte à contrôler l'ensemble des actions nécessaires à la mise en oeuvre de l'invention.

Avantageusement, le contrôleur peut être agencé pour :
- déterminer, sur réception d'une information à transmettre via le dispositif lumineux, si un premier signal d'alimentation de la au moins première source doit être modifié pour coder ladite information à transmettre et/ou si un deuxième signal d'alimentation de la au moins deuxième source doit être modifié pour coder ladite information à transmettre, ladite détermination étant fonction au moins d'une information relative à une alimentation de la première source ;
- modifier, en fonction de ladite détermination, le premier signal d'alimentation et/ou le deuxième signal d'alimentation pour coder ladite information à transmettre.

On comprend ainsi que dans ce mode de réalisation, l'information relative à l'ensoleillement local est déterminée par la présence d'un signal d'alimentation de la première source. Par exemple, si la première source est destinée à réaliser une fonction de feu diurne (ou DRL), la présence d'un signal d'alimentation de cette première source permet de déterminer que l'on est en période diurne et qu'il y a donc un ensoleillement local. En variante, si la première source est destinée à réaliser une fonction d'éclairage ou de signalisation nocturne, par exemple un éclairage de route, la présence d'un signal d'alimentation de cette première source permet de déterminer que l'on est en période nocturne et qu'il y a donc pas d'ensoleillement local.

Dans un mode de réalisation particulière, la première source de lumière ou la deuxième source de lumière peut comprendre une puce à semi-conducteur, notamment une LED (ou DEL pour Diode électroluminescente en français). En effet, les variations lumineuses des puces à semi-conducteur peuvent être très rapides et le codage d'une information par clignotement lumineux peut alors être imperceptible pour l'oeil humain tout en étant détectable par des outils de mesure adéquats.

Les puces à semi-conducteurs peuvent être agencées en un unique composant électronique, par exemple une LED bipuces ou multipuces.

En outre, la première source de lumière peut être apte à émettre une lumière visible tandis que la deuxième source de lumière peut être apte à émettre une lumière infrarouge.

Ainsi, la deuxième source de lumière peut servir de moyens de transmission lorsque la première source n'est pas allumée (ex. conduite de jour sans feux de route) ou que la première source est faiblement allumée (ex. veille). Cette deuxième source permet alors une transmission invisible pour l'oeil humain.

Le dispositif de contrôle peut, par exemple, comporter des moyens de détection d'une alimentation de la première source, ladite information relative à l'ensoleillement local étant fonction de ladite détection.

En complément ou en variante, le dispositif de contrôle peut comporter un capteur solaire.

Dans un mode de réalisation, le dispositif de contrôle peut être agencé pour commander, en fonction de ladite détermination, l'émission d'un unique faisceau lumineux par une seule des première et deuxième sources de lumière et pour moduler, en fonction de ladite détermination, ledit faisceau lumineux pour coder ladite information à transmettre.

Le cas échéant, le dispositif de contrôle peut être agencé pour commander l'extinction de l'autre des première et deuxième sources de lumière pendant l'émission dudit unique faisceau lumineux, de jour.

Dans un exemple de réalisation de l'invention selon lequel la première source de lumière émet de la lumière visible et la deuxième source de lumière infrarouge, le dispositif de contrôle est agencé de sorte à commander, de nuit, l'émission d'un faisceau lumineux visible par la première source de lumière pour réaliser une fonction d'éclairage et/ou de signalisation et pour moduler ce faisceau lumineux visible pour coder ladite information à transmettre, la diode infrarouge étant maintenue éteinte par le dispositif de contrôle.

Le dispositif de contrôle peut également être agencé pour commander, en fonction de ladite détermination, l'émission d'un premier faisceau lumineux par la première source de lumière et d'un deuxième faisceau lumineux par la deuxième source de lumière, et pour moduler, en fonction de ladite détermination, un seul desdits premier et deuxième faisceaux lumineux pour coder ladite information à transmettre.

Le cas échéant, le dispositif de contrôle est agencé pour commander l'émission simultanée des premier et deuxième faisceaux lumineux.

Dans un exemple de réalisation de l'invention selon lequel la première source de lumière émet de la lumière visible et la deuxième source de lumière infrarouge, le dispositif de contrôle est agencé de sorte à commander, de jour, l'émission d'un faisceau lumineux visible par la première source de lumière pour réaliser une fonction d'éclairage et/ou de signalisation et pour commander l'émission d'un faisceau lumineux infrarouge par la deuxième source de lumière et pour moduler ce faisceau lumineux infrarouge pour coder ladite information à transmettre.

En outre, le contrôleur peut être configuré pour effectuer la modification dudit premier signal d'alimentation à une première fréquence de codage inférieure à une deuxième fréquence de codage utilisée pour effectuer la modification dudit deuxième signal d'alimentation.

En effet, les performances de transmissions (i.e. erreurs de transmission, portée de transmission, etc.) des différentes sources de lumière peuvent être différentes. En particulier, il est constaté que la performance de transmission est plus grande pour les sources de lumière infrarouge en comparaison aux sources de lumière visible. Dès lors, il est possible d'utiliser une fréquence de transmission (et donc de codage) plus élevée pour les sources dont la performance est plus grande.

Dans un mode de réalisation de l'invention, le dispositif peut comprendre au moins un bloc phare. La première source de lumière et/ou la deuxième source de lumière peut alors être installée dans ledit bloc phare.

Cette installation permet de simplifier les contraintes mécaniques d'installation et, par exemple, de mutualiser les dispositifs d'éclairage / de signalisation existants (i.e. feux de route, feux de position, feux de recul, phares antibrouillard, DRL, clignotants, etc.) avec les dispositifs de transmission / de détection.

Par exemple, le contrôleur peut être adapté pour déterminer que le deuxième signal d'alimentation doit être modifié si l'alimentation de la première source est inférieure à un seuil prédéterminé.

Ainsi, s'il est déterminé que la première source n'est pas assez puissante, il est possible d'utiliser, en remplacement ou en complément, la seconde source de lumière comme dispositif de transmission / de détection.

En outre, le contrôleur peut être adapté pour déterminer que le premier signal d'alimentation ne doit pas être modifié si l'alimentation de la première source est inférieure à un seuil prédéterminé.

Ainsi, s'il est déterminé que la première source n'est pas assez puissante, il est possible d'utiliser, en remplacement, la seconde source de lumière comme dispositif de transmission / de détection.

Avantageusement, le dispositif peut comprendre en outre un dispositif optique présentant un foyer. La première source de lumière et la deuxième source de lumière peuvent alors être installées au voisinage dudit foyer.

Dans un mode de réalisation particulier, le dispositif peut comprendre en outre un réflecteur. La première source de lumière et la deuxième source de lumière peuvent être alors installées en vis-à-vis dudit réflecteur.

Cette installation permet d'obtenir un système compact combinant dispositif d'éclairage / de signalisation et dispositif de transmission / de détection. De plus, la direction de la lumière émise par chacune des sources de lumière peut être reflétée dans une même direction sans besoin d'installer plusieurs réflecteurs.

Le dispositif peut comprendre en outre :
- un guide d'onde ;
- un réflecteur.

La première source de lumière et la deuxième source de lumière peuvent être alors installées en vis-à-vis dudit guide d'onde et le guide d'onde peut être installé en vis-à-vis dudit réflecteur.

De manière similaire, le dispositif peut comprendre en outre :
- un dispositif optique primaire présentant deux faces d'entrée de lumière et une face de sortie de lumière;
- un dispositif optique secondaire présentant un foyer.

La première source de lumière et la deuxième source de lumière sont alors installées chacune en vis-à-vis de l'une des faces d'entrée de lumière dudit dispositif optique primaire.

La face de sortie du dispositif primaire est alors installée au foyer dudit dispositif optique secondaire.

Dans un mode de réalisation, une fréquence de codage de ladite information à transmettre lors de la modification du premier signal et/ou du deuxième signal peut être supérieure à 25Hz.

Ainsi, l'éventuellement clignotement de la source de lumière est imperceptible pour l'oeil humain.

En outre, le contrôleur peut être configuré pour diminuer la fréquence de codage de ladite en cas de survenance d'au moins une des conditions suivantes :
- un taux d'erreur durant une transmission précédente a dépassé une valeur prédéterminée ;
- une information relative à une présence de pluie ou de brouillard est reçue.

Ainsi, si les conditions environnementales ne sont pas favorables, il est possible de diminuer la fréquence de codage pour rendre la transmission plus robuste.

La présente invention vise en outre un dispositif lumineux, notamment d'éclairage et/ou de signalisation pour véhicule automobile, comprenant :
- une source de lumière ;
- un contrôleur adapté pour :
   - modifier un signal d'alimentation de ladite source de lumière pour coder une information à transmettre, la modification dudit signal comprenant une multiplication du signal d'alimentation avec un signal codant comportant des formes répétées dans ledit signal, lesdites formes ayant une extension temporelle donnée et une amplitude,
   - sur réception d'une commande, réduire l'extension temporelle desdites formes et augmenter l'amplitude desdites formes dans le signal.

Par exemple, les formes répétées dans le signal peuvent être des créneaux ou des formes s'en approchant (des formes en triangle, des gaussiennes, des portions de sinusoïdes, etc.).

L'amplitude de ces formes est souvent la valeur maximale de ces formes durant leur extension temporelle (hors parasites ou bruits dans le signal lié au codage par exemple).

La réduction conjointe de l'extension temporelle des formes et l'augmentation de l'amplitude permettent d'accroitre la puissance des impulsions de lumière émise par les sources de lumière (et donc la portée de transmission des sources) tout en évitant d'éblouir un usager de la route.

Dans un mode de réalisation, le contrôleur peut être adapté pour modifier ledit signal d'alimentation selon un codage de Manchester.

En effet, ce codage ayant une moyenne du signal codant nulle permet d'obtenir une source lumineuse ayant une puissance lumineuse en apparence constante. Par ailleurs, ce codage permet d'éviter des pertes de synchronisation. En outre, il est robuste contre les parasites.

En outre, la réduction de l'extension temporelle peut être fonction à l'augmentation de l'amplitude.

Cette « fonction » peut être basée sur un étalonnage de la puissance lumineuse de la source lumineuse en fonction de la puissance électrique reçue. En effet, la réponse n'est pas nécessairement linéaire.

Bien entendu, la réduction de l'extension temporelle peut être proportionnelle à l'augmentation de l'amplitude.

Dans cette hypothèse, il est possible de réaliser des dispositifs de contrôle simple et peu couteux, car la linéarité de la réponse de la puissance lumineuse en fonction de la puissance électrique est une approximation fiable au premier ordre.

Dans un mode de réalisation, le signal codant comportant une fréquence de codage, ladite fréquence de codage est conservée lors de la réduction de l'extension temporelle desdites formes.

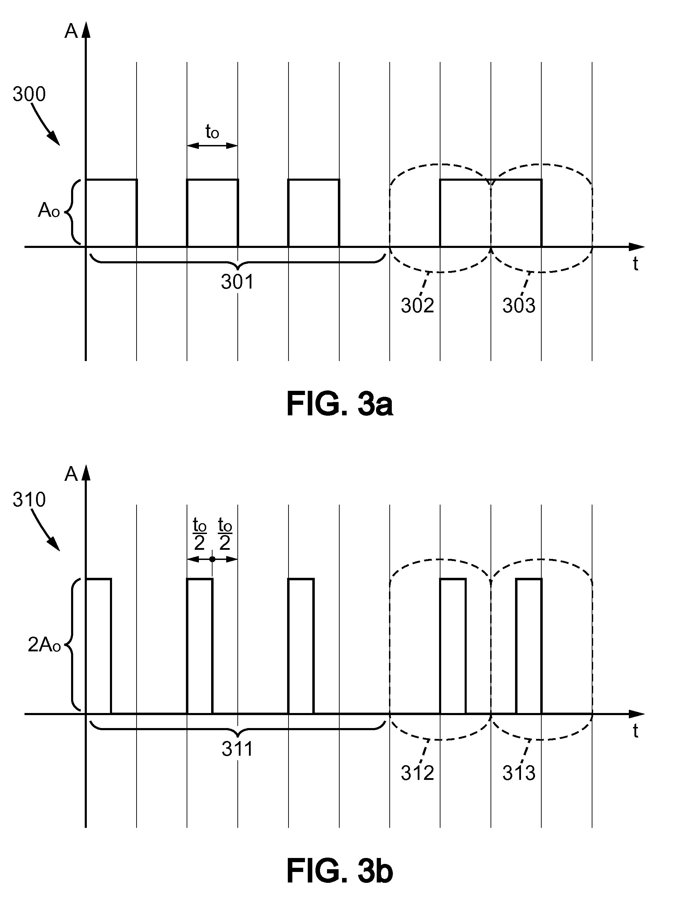

En effet, le fait que l'extension temporelle des formes répétées dans le signal soit réduite ne signifie pas nécessairement que la fréquence d'apparition de ces formes soit augmentée. Ce point est mis en évidence par la figure 3b ci-dessous.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une communication entre deux véhicules automobiles dans une réalisation particulière de l'invention ;
- les figures 2a et 2b illustrent des dispositifs lumineux, notamment d'éclairage et/ou de signalisation pour véhicules automobiles dans deux modes de réalisation de l'invention ;
- les figures 3a et 3b illustrent des signaux d'alimentation de dispositifs lumineux selon certains modes de réalisation de l'invention.

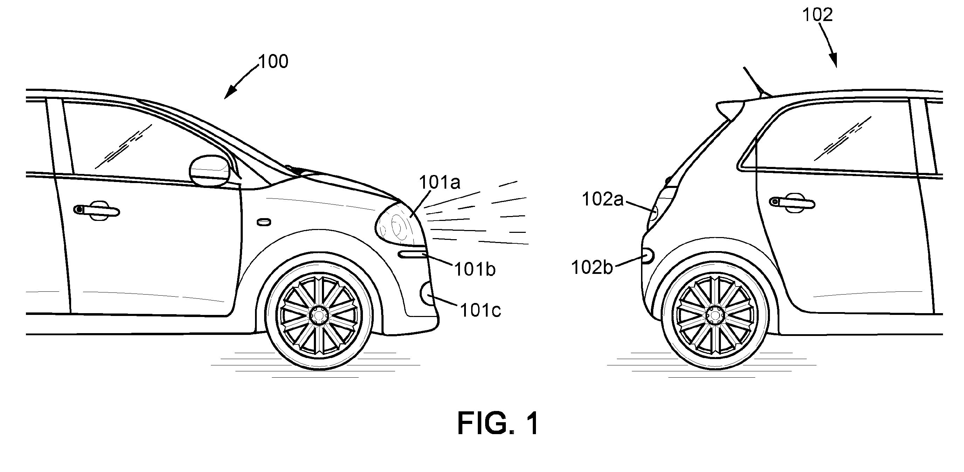

La figure 1 illustre une communication entre deux véhicules automobiles dans une réalisation particulière de l'invention.

Lors d'un déplacement en véhicule automobile, il peut être utile pour ce véhicule d'interagir avec son environnement proche : les éventuels obstacles, les voitures à proximité, les panneaux de signalisation, etc.

En effet, ces interactions peuvent permettre au véhicule d'adapter la conduite proposée au conducteur de la voiture. À titre non limitatif, ces interactions peuvent comprendre :
- la réception/transmission depuis un panneau de signalisation de la vitesse maximale autorisée sur une route afin que le véhicule puisse configurer un « limiteur » de vitesse du véhicule ;

- la réception/transmission de la vitesse courante de conduite du véhicule/des autres véhicules à proximité afin d'adapter la vitesse courante à la vitesse moyenne des autres véhicules ;
- l'estimation des distances des autres véhicules ;
- la réception/transmission d'une information de freinage brusque afin que les autres véhicules puissent agir en conséquence (ex. freinage et déclenchement des feux de détresse) ;
- etc.

Avantageusement, il est possible, comme indiqué précédemment, d'utiliser les dispositifs d'éclairage ou de signalisation existants (ex. phares à LED 101a, DRL ou feux de circulation diurne 101 b en français, feux de position, antibrouillards 101 c ou 102b, dans les feux arrières 102a, etc.) afin de servir comme émetteurs des dispositifs de communication / détection.

Ainsi, la combinaison des dispositifs d'éclairage ou de signalisation existants et des émetteurs des dispositifs de communication / détection permet un gain notable de place et diminue les contraintes mécaniques d'installation.

Ainsi, lorsque dispositifs d'éclairage ou de signalisation existants sont alimentés (ex. le conducteur a souhaité allumé ses feux de route), il est possible de faire clignoter ces dispositifs à haute fréquence afin de pouvoir transmettre une information, et ainsi faire fonctionner ces dispositifs d'éclairage ou de signalisation comme des émetteurs de dispositifs de communication / détection.

Bien entendu, le clignotement de ces dispositifs doit être suffisamment rapide pour éviter que l'oeil humain ne détecte ce clignotement ou que celui-ci entraine une fatigue visuelle. Dès lors, la fréquence de clignotement utilisé est avantageusement supérieure à l'inverse du temps de persistance rétinienne (>=25 Hz).

Il est possible que le type de dispositifs d'éclairage utilisés limite la fréquence de clignotement : en effet, certaines ampoules / LED ou autres puces émettrices à semi-conducteur peuvent posséder des fréquences maximales au-delà desquelles le dispositif d'éclairage se détériore ou au-delà desquelles le clignotement n'est plus visible (le dispositif d'éclairage émettant alors en continu une lumière).

Pour autant, et pour des LED ou autres puces émettrices à semi-conducteur, il est courant que celles-ci puissent clignoter à des fréquences de l'ordre de quelques centaines de Hertz (ex. 100 Hz, 200 Hz, 500 Hz).

S'il est avantageux de faire clignoter les dispositifs d'éclairage à des fréquences proches de leur fréquence maximale de clignotement (ex. 10% en dessous de leur fréquence maximale de clignotement) (la vitesse de transmission des données étant alors maximale), cette fréquence peut être réduite dynamiquement sous certaines conditions :
- présence de brouillard ou de pluie (information obtenue par exemple via les détecteurs de pluie sur le pare-brise, via l'enclenchement des essuie-glaces par le conducteur, via des données météorologiques provenant d'Internet, etc.) ;
- taux d'erreurs détectés lors d'une transmission précédente supérieure à un seuil prédéterminé ;
- etc.

La réduction dynamique de la fréquence permet ainsi de maintenir le canal de communication / détection fiable malgré le fait que les conditions de transmission se dégradent.

En complément ou en variante de cette réduction de fréquence, il est possible d'introduire dans la transmission un code correcteur d'erreurs ou de renforcer le code correcteur d'erreurs déjà existant.

Le clignotement peut être un clignotement complet de la source lumineuse (i.e. une période de temps pendant laquelle la source est émettrice, une période de temps pendant laquelle la source est non-émettrice), mais ce clignotement peut également être un clignotement partiel (i.e. variation de l'intensité lumineuse de la source lumineuse entre deux valeurs non nulles). Afin de réaliser ces clignotements, il est possible de combiner à la tension d'alimentation de la source lumineuse un signal d'information de fréquence adéquate (i.e. quelques centaines de Hertz comme cela est évoqué précédemment).

Par ailleurs, la fréquence peut être variable en fonction de la source lumineuse utilisée. En effet, il est constaté que la qualité de la transmission peut être meilleure pour les sources lumineuses infrarouges (par exemple). Dès lors, la fréquence utilisée peut être plus importante pour ce type de sources lumineuses.

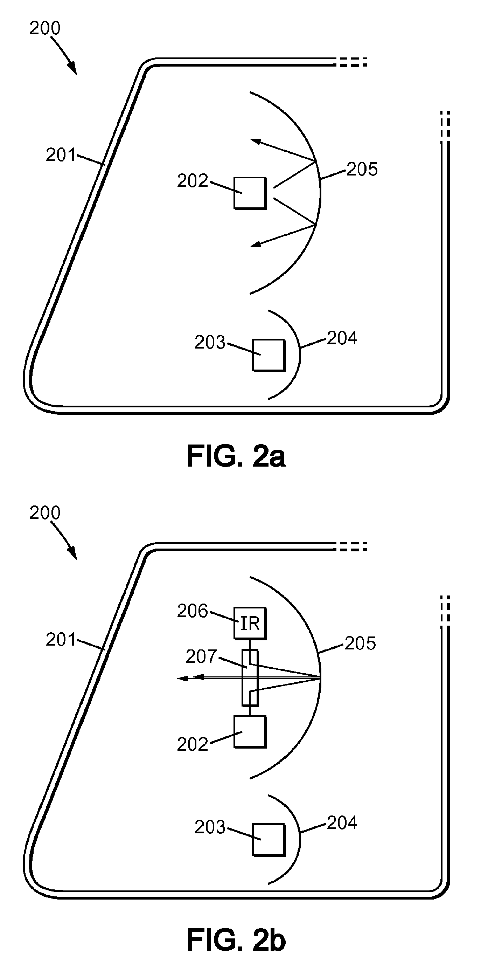

Les figures 2a et 2b illustrent des dispositifs lumineux, notamment d'éclairage et/ou de signalisation pour véhicules automobiles dans deux modes de réalisation de l'invention.

Sur la Figure 2a, le dispositif d'éclairage pour véhicule 200 comprend :
- un boitier 201 (comprenant une partie avant transparente ou tout du moins translucide),
- un ensemble de diode(s) d'éclairage 202 de haute puissance pouvant agir comme feux de croisement (par exemple),
- un premier réflecteur 205 adapté pour diriger vers la partie transparente / translucide du boitier 201 les rayons lumineux en provenance de l'ensemble 202 ;
- un ensemble de diode(s) de signalisation 203 (de puissance plus faible que les diodes 202) pouvant agir comme feux de circulation diurne (par exemple) ;
- un deuxième réflecteur 204 adapté pour diriger vers la partie transparente / translucide du boitier 201 les rayons lumineux en provenance de l'ensemble 203.

Dans ce mode de réalisation, il est possible d'utiliser l'ensemble de diode(s) 202 comme dispositifs de communication / détection lorsque cet ensemble de diode(s) 202 est alimenté (i.e. lorsque les feux de croisement sont nécessaires à la conduite et / ou activés par le conducteur). Si cet ensemble de diode(s) 202 n'est pas alimenté, il est alors possible d'alimenter les feux de circulation diurne (ensemble de diode(s) de signalisation 203) et d'utiliser ces derniers feux comme dispositifs de communication / détection.

Dès lors, il existe à tout instant (de jour comme de nuit), des dispositifs de communication / détection activés dans le dispositif d'éclairage 200.

Bien entendu, les feux de circulation diurne peuvent être déportés hors du bloc phare 201.

Sur la Figure 2b, le dispositif d'éclairage pour véhicule 200 comprend :
- un boitier 201 (comprenant une partie avant transparente ou tout du moins translucide),
- un ensemble de diode(s) d'éclairage 202 de haute puissance pouvant agir comme feux de croisement ou feux de route (par exemple),
- un ensemble de diode(s) infrarouges (ou IR) 206 de haute puissance,
- optionnellement, un guide d'onde 207 (ou guide de lumière),
- un premier réflecteur 205 adapté pour diriger vers la partie transparente / translucide du boitier 201 les rayons lumineux/IR en provenance de l'ensemble 202 et de l'ensemble 207 (le cas échéant, les rayons lumineux/IR traversent préalablement le guide d'onde 207 avant de se refléter sur le réflecteur 205) ;
- un ensemble de diode(s) de signalisation 203 (de puissance plus faible que les diodes 202) pouvant agir comme feux de circulation diurne (par exemple) ;
- un deuxième réflecteur 204 adapté pour diriger vers la partie transparente / translucide du boitier 201 les rayons lumineux en provenance de l'ensemble 203.

Dans ce mode de réalisation, il est possible d'utiliser l'ensemble de diode(s) 202 comme dispositifs de communication / détection lorsque cet ensemble de diode(s) 202 est alimenté (i.e. lorsque les feux de croisement sont nécessaires à la conduite et / ou activés par le conducteur).

Le guide d'onde 207 est optionnel dans ce mode de réalisation. Ainsi, il est possible de s'en affranchir en positionnant, par exemple, les deux ensembles de diode(s) 202 et 206 côte à côte, proche du centre optique du réflecteur 205.

En complément ou en variante lorsque cet ensemble de diode(s) 202 n'est pas alimenté, il est possible d'utiliser l'ensemble de diode(s) IR 206 comme dispositifs de communication / détection.

Dans l'hypothèse où l'ensemble de diode(s) IR 206 est utilisé en complément de l'ensemble de diode(s) 202 comme dispositifs de communication / détection, il est possible de prévoir :
- que ces deux ensembles transmettent simultanément la même information ;
- qu'un des deux ensembles transmette une partie de l'information à transmettre tandis que le deuxième ensemble transmet la partie complémentaire ;
- qu'un des deux ensembles transmette l'information à transmettre tandis que le deuxième ensemble transmet un code correcteur d'erreurs de cette même information.

Ainsi, si les feux de croisement ne sont pas utilisés, l'ensemble de diode(s) IR peut permettre une transmission d'informations sans que cette transmission soit visible pour les usagers de la route et sans qu'il soit nécessaire d'allumer les feux (visibles) du véhicule pour permettre cette transmission.

Bien entendu, il est possible de combiner les modes de réalisations présentés dans la Figures 2a et 2b.

Le choix de l'ensemble ou des ensembles de diodes utilisés comme émetteurs d'un dispositif de communication / détection peut être effectué par un circuit de commande, intégré ou non au dispositif d'éclairage 200. Ainsi, ce circuit de commande (non représenté) reçoit via une interface prévue à cet effet les informations à transmettre et détermine l'ensemble ou les ensembles de diodes à faire clignoter.

Ce circuit peut être, par exemple :
- un processeur apte à interpréter des instructions sous la forme de programme informatique, ou
- une carte électronique dont le fonctionnement est décrit dans le silicium, ou encore
- une puce électronique programmable comme une puce FPGA (pour « Field-Programmable Gate Array » en anglais).

Par ailleurs, il est également possible de prévoir que le faisceau lumineux visible émis par la diode 202 soit masqué pour certaines zones de l'espace (ex. masquage des feux de route pour éviter l'éblouissement du conducteur venant en direction opposée) alors que le faisceau infrarouge émis par la diode 206 n'est pas masqué dans ces zones. Cela est possible notamment en utilisant un masque bloquant seulement certaines longueurs d'onde ou en prévoyant, au moins en partie, des chemins optiques différents pour les différents faisceaux (le masquage survenant sur un chemin optique où les faisceaux sont séparés).

A titre d'illustration, et de manière non limitative, les différentes sources de lumière visibles peuvent être dans un véhicule :
- a l'avant :
   - Les feux « code » ;
   - Les feux « route » ;
   - Les DRL ;
   - Les lampes « ville » ;
   - Des spots laser ;
   - Des lampes de positionnement ou « marking light » en anglais ;
- à l'arrière :
   - Les feux de position ;
   + Les feux stop ;
   + Les feux anti brouillard ;
   + Les feux de recul.

Les figures 3a et 3b illustrent des signaux d'alimentation de dispositifs lumineux selon certains modes de réalisation de l'invention.

Dans le mode de réalisation présentée en Figure 3a, le signal d'alimentation 300 du dispositif lumineux n'est pas un courant constant : le signal d'alimentation est ici un signal d'alimentation en créneaux de période 2t₀ et d'amplitude A₀.

Ce signal 300 en créneaux permet notamment de procéder à un codage dit de « Manchester » de l'information à transmettre.

Par exemple, avant tout début de transmission d'une information, il est possible d'émettre un motif type 301 partagé au moins par l'émetteur et le récepteur. Ce motif type 301 permet au récepteur de reconnaitre un début de transmission et de synchroniser son horloge interne sur l'horloge de l'émetteur.

Suite à ce motif 301, les bits d'information sont codés sur une période, la partie du signal 302 correspondant par exemple à un bit 0 et la partie du signal 303 correspondant par exemple à un bit 1.

En moyenne, le signal est d'amplitude A₀/2. Ainsi, si l'amplitude souhaitée pour le dispositif d'éclairage ou de signalisation est A₁ (i.e. sans clignotement), la valeur est A₀ est choisi comme étant le double de l'amplitude de A₁ lorsque le clignotement est activé par le circuit de commande.

Par ailleurs, il peut survenir des cas où l'amplitude A₀ ne permet pas une distance de transmission suffisante (la distance étant effectivement fonction de cette amplitude) : cela est notamment le cas si les ensembles de diodes utilisées comme dispositifs de communication / détection ne sont pas destinés à éclairer loin du véhicule, mais seulement destinés à être vus (ex. les feux de circulation diurne, feux de stop, feux de position, etc.). Dans ces hypothèses, il est possible de prévoir que l'amplitude d'alimentation de ces ensembles de diodes soit augmentée d'un facteur N (ex., d'un facteur deux comme présenté en Figure 3b).

Afin d'éviter que l'intensité lumineuse perçue par le conducteur (ou toute autre personne) augmente, il est alors possible de réduire les périodes d'émission de lumière du même facteur N (ex. t₀/2 comme présenté en Figure 3b). L'efficacité de l'émetteur pouvant décroitre quand l'amplitude A₀ augmente, il convient de la prendre en considération dans le but de garantir une intensité lumineuse constante perçue par le conducteur.

Ainsi, dans le mode de réalisation présentée en Figure 3b, le signal d'alimentation 300 du dispositif lumineux est un signal d'alimentation en créneaux de période 2t₀ et d'amplitude 2A₀. Le motif 301 est alors transformé en motif 311. Par ailleurs, les bits sont codés à l'aide des parties de signaux 312 et 313.

Bien entendu, le facteur N peut prendre de nombreuses valeurs comme 3, 4, 5 ou 6. Ce facteur N peut être adapté en fonction des impératifs de distances de transmission nécessaires et/ou en fonction des caractéristiques propres à la source lumineuse (ex. intensité ou tension maximale).

Bien entendu, la présente invention ne se limite pas aux formes de réalisation décrites ci-avant à titre d'exemple ; elle s'étend à d'autres variantes.

Par exemple, il est possible d'utiliser tout autre codage pour la transmission des données autres que le codage de « Manchester » décrit précédemment. Par exemple, il est possible d'utiliser un codage de « Manchester différentiel », un codage de « Miller », un codage « NRZ » (pour « Non Return to Zero » en anglais), un codage « NRZI » (pour « Non Return to Zero Inverted » en anglais), un codage « NRZM » (pour « Non Return to Zero Mark »), un codage « RZ » (pour « Return to Zero») ou tout autre codage. Bien entendu, si la liste des codages listés ne présente que des codages dits à deux niveaux (d'amplitude), il est également possible de réaliser des codages ayant plus de niveaux (ex. AMI, Bipolaire, BHDn, B8ZS, HDB3, MLT-3, etc.).

Par ailleurs, les diodes de la description peuvent être remplacées par des lasers ou des diodes laser. L'utilisation de lasers ou de diodes laser permet une communication directionnelle et permet d'augmenter la portée de communication pour une puissance équivalente.

## Revendications

1. Dispositif lumineux (101 a, 101 b, 101 c, 102a, 102b, 200), notamment d'éclairage et/ou de signalisation (100) pour véhicule automobile, comprenant :
- au moins une première source de lumière (202) destinée à émettre un premier faisceau lumineux modulé codant une information;
- au moins une deuxième source de lumière (206, 203) destinée à émettre un deuxième faisceau lumineux modulé codant une information;
- un dispositif de contrôle adapté pour :
- déterminer, sur réception d'une information à transmettre via le dispositif lumineux, si un premier faisceau lumineux destiné à être émis par la première source doit être modulé pour coder ladite information à transmettre et/ou si un deuxième faisceau destiné à être émis par la deuxième source doit être modulé pour coder ladite information à transmettre, ladite détermination étant fonction d'une information relative à l'ensoleillement local ;
- moduler, en fonction de ladite détermination, le premier faisceau lumineux et/ou le deuxième faisceau lumineux d'alimentation pour coder ladite information à transmettre.

2. Dispositif selon la revendication précédente, dans lequel :
- la première source de lumière (202) est apte à émettre une lumière visible ;
- la deuxième source de lumière (206) est apte à émettre une lumière infrarouge.

3. Dispositif selon l'une des revendications précédentes, dans lequel le dispositif de contrôle comporte des moyens de détection d'une alimentation de la première source, ladite information relative à l'ensoleillement local étant fonction de ladite détection.

4. Dispositif selon l'une des revendications précédentes, dans lequel le dispositif de contrôle est agencé pour commander, en fonction de ladite détermination, l'émission d'un unique faisceau lumineux par une seule des première et deuxième sources de lumière et pour moduler, en fonction de ladite détermination, ledit faisceau lumineux pour coder ladite information à transmettre.

5. Dispositif selon l'une des revendications précédentes, dans lequel le dispositif de contrôle est agencé pour commander, en fonction de ladite détermination, l'émission d'un premier faisceau lumineux par la première source de lumière et d'un deuxième faisceau lumineux par la deuxième source de lumière, et pour moduler, en fonction de ladite détermination, un seul desdits premier et deuxième faisceaux lumineux pour coder ladite information à transmettre.

6. Dispositif selon l'une des revendications précédentes, dans lequel le contrôleur est configuré pour effectuer la modification dudit premier signal d'alimentation à une première fréquence de codage inférieure à une deuxième fréquence de codage utilisée pour effectuer la modification dudit deuxième signal d'alimentation.

7. Dispositif selon l'une des revendications précédentes, dans lequel le dispositif comprend au moins :
- un bloc phare (201) ;
la première source de lumière (202) et/ou la deuxième source (203, 206) de lumière est installées dans ledit bloc phare (201).

8. Dispositif selon l'une des revendications précédentes, dans lequel le contrôleur est adapté pour déterminer que le deuxième signal d'alimentation doit être modifié si l'alimentation de la première source (202) est inférieure à un seuil prédéterminé.

9. Dispositif selon l'une des revendications précédentes, dans lequel le contrôleur est adapté pour déterminer que le premier signal d'alimentation ne doit pas être modifié si l'alimentation de la première source (202) est inférieure à un seuil prédéterminé.

10. Dispositif selon l'une des revendications précédentes, dans lequel une fréquence de codage de ladite information à transmettre lors de la modification du premier signal et/ou du deuxième signal est supérieure à 25Hz.

11. Dispositif selon la revendication 10, dans lequel le contrôleur est en outre configuré pour diminuer la fréquence de codage de ladite en cas de survenance d'au moins une des conditions suivantes :
- un taux d'erreur durant une transmission précédente a dépassé une valeur prédéterminée ;
- une information relative à une présence de pluie ou de brouillard est reçue.

12. Dispositif lumineux (101 a, 101b, 101 c, 102a, 102b, 200), notamment d'éclairage et/ou de signalisation (100) pour véhicule automobile, comprenant :
- une source de lumière (202) ;
- un contrôleur adapté pour :
- modifier un signal d'alimentation de ladite source de lumière pour coder une information à transmettre, la modification dudit signal comprenant une multiplication du signal d'alimentation avec un signal codant comportant des formes répétées dans ledit signal, lesdites formes ayant une extension temporelle donnée et une amplitude,
- sur réception d'une commande, réduire l'extension temporelle desdites formes et augmenter l'amplitude desdites formes dans le signal.

13. Dispositif selon la revendication 12, dans lequel le contrôleur est adapté pour modifier ledit signal d'alimentation selon un codage de Manchester.

14. Dispositif selon l'une des revendications 12 à 13, dans lequel la réduction de l'extension temporelle est fonction à l'augmentation de l'amplitude.

15. Dispositif selon l'une des revendications 12 à 14, dans lequel, signal codant comportant une fréquence de codage, ladite fréquence de codage est conservée lors de la réduction de l'extension temporelle desdites formes.
